# EUROPÄISCHE PATENTANMELDUNG

(11) **EP 3 338 600 A1**
(43) Veröffentlichungstag der Anmeldung: **27.06.2018**
(21) Anmeldenummer: 16206245.9
(22) Anmeldetag: 22.12.2016
(51) Int. Cl.: A47J 31/36

(54) **BRÜHMODUL UND GETRÄNKEZUBEREITUNGSMASCHINE**

(71) Anmelder: Qbo Coffee GmbH, 8304 Wallisellen (CH)
(72) Erfinder: Kroos, Friedrich, 8606 Greifensee (CH)
(74) Vertreter: Frei Patent Attorneys

(57) **Zusammenfassung**

Ein Brühmodul zum Zubereiten eines Brühgetränks aus einer Portionskapsel weist ein erstes Brühmodulteil (3) und ein relativ zu diesem zwischen einer ersten Brühmodulteil-Position und einer zweiten Brühmodulteil-Position bewegbares zweites Brühmodulteil (4) auf. Weiter ist ein Bedienelement (6) vorhanden welches manuell von einer ersten in eine zweite Bedienelement-Position bringbar ist. Das Brühmodul zeichnet sich durch einen Energiespeicher (7) aus, der eingerichtet ist, durch Bewegen des Bedienelements von der ersten in die zweite Position in das Brühmodul eingekoppelte Energie zwischenzuspeichern und durch eine Freigabe ausgelöst in eine Bewegung von der ersten Brühmodulteil-Position in die zweite Brühmodulteil-Position wieder umzusetzen.

## Beschreibung

Die Erfindung betrifft Extraktionsgeräte zum Zubereiten von Getränken oder dergleichen aus einem in einer Portionskapsel enthaltenen Extraktionsgut, beispielsweise gemahlenem Kaffee. Sie betrifft insbesondere ein Brühmodul für ein Extraktionsgerät, ein Kapselerkennungsmodul sowie eine Getränkezubereitungsmaschine mit einem solchen Brühmodul und/oder Kapselerkennungsmodul.

Extraktionsgeräte zum Zubereiten von Getränken oder dergleichen aus einem in einer Portionsverpackung vorhandenen Extraktionsgut sind beispielsweise als Kaffee- oder Espressomaschinen bekannt. In vielen entsprechenden Systemen sind die Portionsverpackungen als Kapseln ausgebildet, in denen das Extraktionsgut bspw. luftdicht abgeschlossen ist. Für die Extraktion wird die Kapsel angestochen, beispielsweise an zwei einander gegenüberliegenden Seiten. Auf der ersten Seite wird dann eine Extraktionsflüssigkeit - im Allgemeinen heisses Wasser - eingeleitet. Auf der zweiten Seite wird das Extraktionsprodukt aus der Kapsel ausgeleitet. Dies geschieht in einem sogenannten Brühmodul. Ein solches weist eine Brühkammer auf, in der die Kapsel aufgenommen wird. Besonders beliebt sind Brühmodule, bei welchen die Kapsel eingeworfen und die Brühkammer manuell mittels eines Bedienhebels oder automatisch motorisiert verschlossen wird, wobei beim erneuten Öffnen der Brühkammer nach dem Brühvorgang die Kapsel selbsttätig aus der Brühkammer entfernt und in einen Kapselbehälter ausgeworfen wird. Solche Brühmodule mit selbsttätigem Kapselauswurf sind im Allgemeinen als horizontale Brühmodule ausgebildet, d.h. der Kapseleinwurf erfolgt von oben, das Verschliessen der Brühkammer ist eine horizontale Relativbewegung zweier Brühmodulteile, die Brühflüssigkeit fliesst im wesentlichen horizontal, und der Kapselbehälter ist unterhalb der Brühkammer ausgebildet.

Ein Problemfeld in diesem Zusammenhang betrifft das Erfassen von Kapseleigenschaften, beispielsweise das Auslesen von auf der Kapsel angebrachten Informationen zum Auslösen eines Brühprozesses abhängig von diesen Informationen. Eine Möglichkeit dafür besteht darin, die Kapsel mit einer geeigneten Markierung oder Farbkombination zu versehen und diese optisch zu erfassen. Dies geschieht beispielsweise mit einer Kamera. Weil die Brühkammer selbst im Betrieb zu heiss und verschmutzungsanfällig ist, geschieht das Erfassen der Informationen im Allgemeinen vor dem Brühprozess, während sich die Kapsel noch ausserhalb der Brühkammer befindet, an einer Kapselerkennungsposition.

Beispielsweise aus WO 2016/087190 ist ein Brühmodul mit Kapselerkennungsmodul bekannt, bei welchem die Kapsel nach dem Einlegen in eine Kapselerkennungsposition gelangt, in welcher die Brühmodulteile verhindern, dass die Kapsel weiter nach unten in eine Brühposition fällt. Nach erfolgter Kapselerkennung bewegen sich die Brühmodulteile motorisiert angetrieben so, dass die Kapsel in die Brühposition gelangt und anschliessend die Brühkammer geschlossen wird. Diese Lösung ermöglicht auf einwandfreie Art die Trennung zwischen Kapselerkennungsposition und Brühposition. Sie ist aber nur mit einem motorisierten Brühmodul realisierbar, bei welchem die Brühmodulteile motorisiert zueinander auf- bzw. zubewegt werden. Es kann jedoch von Vorteil sein, wenn das Verschliessen manuell erfolgt, beispielsweise wenn ein motorisierter Antrieb aus Kostengründen nicht gewünscht wird, ein motorisierter Antrieb zu laut ist oder ein manueller Antrieb für das haptische Feedback gewünscht wird.

Es ist Aufgabe der Erfindung, eine Getränkezubereitungsmaschine und ein Brühmodul für eine solche zur Verfügung zu stellen, welche Nachteile des Standes der Technik überwinden, und welche durch eine möglichst einfache Konstruktion die Erfassung von Eigenschaften einer verwendeten Portionskapsel vor dem Brühprozess ermöglichen. Die verwendete Konstruktion sollte auch für die Implementierung als manuell zu betätigendes Brühmodul geeignet sein.

Gemäss der Erfindung wird ein Brühmodul zum Zubereiten eines Brühgetränks aus einer Portionskapsel zur Verfügung gestellt, welches aufweist:
- ein erstes Brühmodulteil und ein relativ zu diesem zwischen einer ersten Brühmodulteil-Position und einer zweiten Brühmodulteil-Position bewegbares zweites Brühmodulteil, wobei in der zweiten Brühmodulteil-Position durch das erste und zweite Brühmodulteil eine Brühkammer gebildet wird, welche die sich in einer Brühposition befindende Portionskapsel beim Brühvorgang mindestens teilweise umgibt, wobei das Brühmodul eingerichtet ist, durch das Einleiten einer Brühflüssigkeit in die Kapsel ein Brühgetränk zu brühen und dieses aus der Kapsel abzuleiten; und
- ein Bedienelement welches manuell von einer ersten in eine zweite Bedienelement-Position bringbar ist,

Das Brühmodul zeichnet sich durch einen Energiespeicher aus, der eingerichtet ist, durch Bewegen des Bedienelements von der ersten in die zweite Position in das Brühmodul eingekoppelte Energie zwischenzuspeichern und durch eine Freigabe ausgelöst in eine Bewegung von der ersten Brühmodulteil-Position in die zweite Brühmodulteil-Position wieder umzusetzen.

Das zweite Brühmodulteil ist beispielsweise relativ zum ersten Brühmodulteil bewegbar, indem das erste Brühmodulteil gehäusefest montiert ist und das zweite Brühmodulteil relativ zum Gehäuse, insbesondere linear-translatorisch, insbesondere horizontal bewegt wird. Auch eine Bewegung beider Brühmodulteile relativ zum Gehäuse oder eine Bewegung bloss des ersten Brühmodulteils relativ zum Gehäuse ist jedoch nicht ausgeschlossen.

Das zweite Brühmodulteil kann ein Injektor sein, durch welchen die Portionskapsel angestochen wird und von welchem beispielsweise heisses Wasser als Brühflüssigkeit in die Portionskapsel eingeleitet wird. Das erste Brühmodulteil kann eine Ausleitvorrichtung zum Ausleiten des Extraktionsprodukts aus der Kapsel bilden. Zu diesem Zweck weist es beispielsweise extraktionsseitige Anstechelemente zum extraktionsseitigen Anstechen der Kapsel oder andere Strukturen auf, welche die Kapsel extraktionsseitig öffnen.

Das Bedienelement kann insbesondere ein Bedienhebel sein, welcher durch eine Kippbewegung von oben nach unten von der ersten in die zweite Position gebracht werden kann. In der zweiten Position verschliesst beispielsweise der Bedienhebel eine Kapseleinlegeöffnung, welche durch ein Gehäuse der Getränkezubereitungsmaschine - beispielsweise der Brühmoduls - gebildet wird.

Die Bewegung des Bedienelements von der ersten in die zweite Position erfolgt gegen einen mechanischen Widerstand, sodass der Benutzer mechanische Arbeit leistet, wobei die dadurch in das Brühmodul eingekoppelte Energie (abzüglich der unvermeidlichen Verluste) im Energiespeicher zwischengespeichert wird. Dieser gibt nach der Freigabe diese Energie in wieder ab, indem er die zum Schliessen der Brühkammer (zum Bewegen des zweiten Brühmodulteils relativ zum ersten Brühmodulteil in die zweite Brühmodul-Position) notwendige mechanische Arbeit leistet.

Es kann optional vorgesehen sein, dass die im Energiespeicher gespeicherte Energie zum Zurückbewegen des Bedienelements in die erste Position verwendet werden kann, wenn keine Freigabe erfolgt, bspw. wenn die Kapselerkennung nicht erfolgreich war oder die Getränkezubereitungsmaschine eine Störung meldet.

Der Energiespeicher kann insbesondere eine Feder sein, wobei dann das Bewegen des Bedienelements in die zweite Position entgegen der Kraft der Feder erfolgt und die Feder dadurch gespannt wird. Nach der Freigabe wird die Feder dadurch entspannt, dass das zweite Brühmodulteil relativ zum ersten Brühmodulteil bewegt wird.

Weiter kann ein Dämpfungsmechanismus vorhanden sein, welcher verhindert, dass das zweite Brühmodulteile - bzw. das Bedienelement - bei der entsprechenden durch die Feder verursachten Bewegung zu sehr beschleunigt wird und dadurch gegen einen Anschlag schnellt. Ein solcher Dämpfungsmechanismus kann im Energiespeicher selbst oder separat davon ausgebildet sein.

In einem Beispiel ist der Energiespeicher eine Gasdruckfeder. Eine solche hat den Vorteil, dass ein Dämpfungsmechanismus gleich in die Feder integriert werden kann.

Zum Bewegen des zweiten Brühmodulteils in die zweite Brühmodulteil-Position übt der Energiespeicher beispielsweise direkt oder indirekt eine Kraft auf das zweite Brühmodulteil in Richtung der zweiten Brühmodulteil-Position und auf das Bedienelement in Richtung erste Position aus: Wenn der Energiespeicher gefüllt und das zweite Brühmodulteil nicht blockiert ist, schliesst sich die Brühkammer, wenn der Energiespeicher gefüllt und das Bedienelement nicht blockiert ist, bewegt sich das Bedienelement zurück in Richtung erste Position. Letzteres kann wie erwähnt benutzt werden, wenn ein Zubereitungsvorgang abgebrochen werden soll, d.h. wenn die Kapseleinlegeöffnung wieder zugänglich sein soll, damit die Kapsel entnommen werden kann.

Das Brühmodul kann insbesondere einen Übertragungsmechanismus zum Einkoppeln der am Bedienelement geleisteten Arbeit in den Energiespeicher und zum Umsetzen der arbeitsleistenden Kraft vom Energiespeicher in eine Bewegung des zweiten Brühmodulteils relativ zum ersten Brühmodulteil aufweisen.

Ein solcher Übertragungsmechanismus - er kann auch als eine Art Getriebe aufgefasst werden - kann beispielsweise als Hebelmechanismus ausgebildet sein. Ergänzend oder alternativ kann er auch andere mechanische Kraft- bzw. Drehmomentübertragungsmittel beinhalten, beispielsweise ineinander greifende Zahnräder, einen Schneckenantrieb, etc.

Der Übertragungsmechanismus kann insbesondere mehrere Kopplungsstellen aufweisen. Beispielsweise kann Folgendes vorgesehen sein:
- An einer ersten Kopplungsstelle greift das Bedienelement an, und die am Bedienelement durch Bewegen in die zweite Position angesetzte Kraft wird durch den Übertragungsmechanismus an den Energiespeicher übertragen und spannt dort ggf. dessen Feder. Bei diesem Vorgang bewegt sich bspw. das zweite Brühmodulteil nicht.
- An einer zweiten Kopplungsstelle ist der Übertragungsmechanismus an den Energiespeicher gekoppelt.
- An einer dritten Kopplungsstelle ist der Übertragungsmechanismus an das zweite Brühmodulteil bzw. einen Bewegungsmechanismus zur Bewegung des zweiten Brühmodulteils relativ zum ersten Brühmodulteil (das kann auch eine Bewegung beider Brühmodulteile relativ zum Gehäuse beinhalten) gekoppelt.

Eine Bewegung des Übertragungsmechanismus an der ersten und an der dritten Kopplungsstelle kann bspw. gezielt blockier- und freigebbar sein. Dadurch sind verschiedene Zustände möglich:
- In einem ersten Zustand ist die dritte Kopplungsstelle blockiert, was bedeutet, dass das zweite Brühmodulteil direkt oder indirekt blockiert ist, und die erste Kopplungsstelle ist freigegeben. In diesem Zustand sind das Bedienelement und der Energiespeicher aneinander gekoppelt - durch eine Bewegung des Bedienelements kann Energie in den Energiespeicher eingekoppelt werden (ggf. durch Spannen der Feder). Umgekehrt kann der Energiespeicher das Bedienelement von der zweiten Position zurück in Richtung der ersten Position bewegen, wenn keine Gegenkraft angesetzt wird.
- In einem zweiten Zustand sind sowohl die erste als auch die dritte Kopplungsstelle blockiert. In diesem Zustand ist keine Bewegung des Übertragungsmechanismus möglich. Im Energiespeicher vorhandene Energie bleibt dort gespeichert. Dieser zweite Zustand wird bspw. nach der Bedienung des Bedienelements eingenommen, während eine Kapselerkennung stattfindet und bevor das Brühmodul geschlossen wird.
- In einem dritten Zustand ist die erste Kopplungsstelle blockiert, bspw. indem das Bedienelement blockiert ist, und die dritte Kopplungsstelle ist freigegeben. In diesem Zustand bewegt der Energiespeicher das zweite Brühmodulteil relativ zum ersten, gegebenenfalls indem die vorher gespannte Feder die Federkraft über den Übertragungsmechanismus auf den entsprechenden Bewegungsmechanismus überträgt.
- In einem vierten Zustand sind sowohl die erste als auch die dritte Kopplungsstelle freigegeben. Indem ein Laden des Energiespeichers (ggf. Spannen der Feder) einen grösseren mechanischen Widerstand bietet als ein Bewegen der Brühmodulteile relativ zueinander, sind in diesem vierten Zustand das Bedienelement und der Bewegungsmechanismus der Brühmodulteile faktisch aneinander gekoppelt, d.h. im vierten Zustand kann bei leerem - oder blockiertem - Energiespeicher das Bedienelement direkt das zweite Brühmodulteil relativ zum ersten Brühmodulteil bewegen, wie das in Getränkezubereitungsmaschinen nach dem Stand der Technik immer der Fall ist. Der vierte Zustand wird eingenommen, wenn nach erfolgter Brühung die Brühkammer wieder geöffnet werden soll. Die Öffnung der Brühkammer wird dann durch ein Zurückbewegen des Bedienelements an die erste Position bewirkt, woraufhin erneut eine Kapsel eingelegt werden. Nach Einnahme des ersten Zustands kann erneut Energie in den Energiespeicher gekoppelt werden.

Im Prinzip wäre es auch möglich, auch die zweite Kopplungsstelle bzw. den Energiespeicher blockierbar auszugestalten. Sofern die erwähnte Bedingung erfüllt ist, wonach ein Laden des Energiespeichers - gegebenenfalls abhängig von der Ausgestaltung des Übertragungsmechanismus über entsprechende Über- oder Untersetzungen - mehr Kraft benötigt als ein Bewegen des zweiten Brühmodulteils relativ zum ersten Brühmodulteil, ist das aber nicht notwendig, da die vier erwähnten Zustände ausreichen.

Wenn der Übertragungsmechanismus als Hebelmechanismus ausgebildet ist, kann er nebst den drei Kopplungsstellen mindestens eine fixe Lagerstelle beinhalten.

In Ausführungsformen weist der Übertragungsmechanismus insbesondere einen ersten Kniehebel auf, wobei der Energiespeicher (bspw. die Feder) mit dem Kniegelenk des ersten Kniehebels verbunden ist. Da sich bei einem solchen Mechanismus die Kraftübersetzung abhängig vom Zustand ändert, kann er insbesondere so eingerichtet sein, dass die vom Energiespeicher eingekoppelte Kraft auch am Ende des Wegs ausreicht, wenn die Feder schon fast entspannt ist. Ein anderer Drehpunkt (End-Drehpunkt) des Kniehebels ist insbesondere mit dem Betätigungselement verbunden.

Wenn der Energiespeicher eine Feder ist, bspw. eine Druckluftfeder, kann er ggf. zwischen dem Kniegelenk des ersten Kniehebels und einer festen Drehachse (Lagerstelle) gelagert sein.

Ergänzend oder alternativ zum ersten Kniehebel weist der Übertragungsmechanismus in Ausführungsformen einen zweiten Kniehebel auf, der an einem der End-Drehpunkte mit dem zweiten Brühmodulteil und am anderen der End-Drehpunkte mit einer fixen Lagestelle verbunden ist. Über das Kniegelenk des zweiten Kniehebels wird die Antriebskraft eingekoppelt. Dadurch kann sichergestellt werden, dass die auf das zweite Brühmodulteil ausgeübte Kraft am Ende des Verschliesswegs, zur zweiten Brühmodulteil-Position hin besonders stark übersetzt wird, so dass die Brühmodulteile mit grosser Kraft dichtend gegeneinander gedrückt werden können.

Der zweite End-Drehpunkt des ersten Kniehebels kann gegebenenfalls an das Kniegelenk des zweiten Kniehebels angeschlossen sein.

Wenn das Bedienelement ein Bedienhebel ist, kann dieser auf der einen Seite an einem festen Drehpunkt gelagert sein, wobei die Kopplung zum Übertragungsmechanismus im Allgemeinen vom äusseren Ende des Bedienhebels entfernt angeordnet ist, um eine Übersetzung der vom Benutzer ausgeübten Kraft zu ermöglichen.

Das Brühmodul weist nebst den diskutierten Elementen beispielsweise eine Kapselerkennungsvorrichtung auf. Im Kontext des vorliegenden Lehre wird die Kapselerkennungsvorrichtung dem Brühmodul zugeordnet, da sie zu demjenigen Teil der Getränkezubereitungsmaschine gehört, welches die Kapsel aufnimmt und mit ihr wechselwirkt, welcher Teil in diesem Text eben Brühmodul genannt wird. Ein Brühmodul im Sinne des vorliegenden Texts kann, muss aber nicht als separates, eigenständiges und auswechselbares Modul vorhanden sein. Es kann sich auch aus verschiedenen, in die Getränkezubereitungsmaschine integrierten Komponenten zusammengesetzt sein.

Mit einer Kapselerkennungsvorrichtung kann - das ist an sich bekannt - insbesondere erstens bestimmt werden, ob die eingelegte Kapsel überhaupt für eine Verwendung in der Getränkezubereitungsmaschine geeignet ist oder nicht. Zweitens besteht die Möglichkeit, aufgrund erkannter Kapseleigenschaften an den Benutzer entsprechende Informationen auszugeben, bspw. über ein Display. Es kann beispielsweise der Getränketyp (Kaffee, Tee, etc.), die Sorte (z.B. "100% Arabica"), die empfohlene Zubereitungsart (z.B. "Espresso", "Ristretto" oder "Lungo" etc.) und/oder eine andere Information angezeigt werden. Drittens kann auch das von der Kaffeemaschine für die Brühung verwendete Programm aufgrund der erkannten Kapselsorte gewählt werden, bspw. können der Brühdruck, die Brühdauer sowie eventuell auch die Temperatur und/oder andere Eigenschaften abhängig davon eingestellt werden, ob die eingelegte Kapsel für die Zubereitung von z.B. Ristretto, Espresso oder Lungo vorgesehen ist.

Die Kapselerkennungsvorrichtung kann insbesondere eingerichtet sein, eine optische Kapselerkennung vorzunehmen, d.h. optische Merkmale der Portionskapsel über einen optischen Sensor auszulesen. Dazu kann auch ein Beleuchtungsmittel vorhanden sein, welches die Kapsel kontrolliert beleuchtet.

Geeignete optisch auslesbare Merkmale sind beispielsweise ein Strichcode, ein 2D-MatrixCode (bspw. QR-Code oder Aztec-Code), ein Piktogramm (Icon) und/oder auch eine bestimmte Farbgebung. Auch ein Code gemäss WO 2016/091859, WO 2016/091860 und/oder WO 2016/091861 kommt in Frage.

Die Kapselerkennungsvorrichtung kann insbesondere angeordnet sein, die Kapselerkennung vorzunehmen, wenn die Kapsel an einer Kapselerkennungsposition ist, welche von der Brühposition verschieden ist und bspw. oberhalb dieser ist.

In Ausführungsformen kann insbesondere vorgesehen sein, dass die Kapselerkennung durch das Bewegen des Bedienelements in seine zweite Position ausgelöst wird.

Ergänzend oder alternativ kann die Getränkezubereitungsmaschine eingerichtet sein, die erfolgte Kapselerkennung für die Freigabe der Bewegung des zweiten Brühmodulteils relativ zum ersten Brühmodulteil in die zweite Brühmodulteil-Position vorauszusetzen. Gegebenenfalls kann eine Eingabe durch den Benutzer als weitere Voraussetzung verlangt werden.

Vor oder während der Bewegung des zweiten Brühmodulteils relativ zum ersten Brühmodulteil erfolgt in diesen Ausführungsformen ein Transport der Kapsel von der Kapselerkennungsposition in die Brühposition, bspw. indem sie nach unten fällt. Zu diesem Zweck kann bspw. vorgesehen sein, dass ein Haltemittel, welches die Kapsel an der Kapselerkennungsposition mindestens teilweise untergreift, zurückgezogen wird.

Insbesondere in Ausführungsformen mit optischer Kapselerkennungsvorrichtung kann das Brühmodul ferner eine mechanisch angetriebene Blasvorrichtung aufweisen. Eine solche funktioniert in der Art eines Blasebalgs. Sie kann als klassischer Blasebalg mit flexibler Membran oder bspw. auch als Kolbensystem ausgestaltet sein. Eine Blasvorrichtung ist insbesondere an den Übertragungsmechanismus gekoppelt und wird durch diesen angetrieben, insbesondere im Rahmen von ohnehin durchgeführten Bewegungen - beispielsweise beim Laden des Energiespeichers oder beim Bewegen des zweiten Brühmodulteils relativ zum ersten Brühmodulteil.

Eine solche Blasvorrichtung ist insbesondere eingerichtet, einen Luftstrom über dasjenige transparente Teil der Kapselerkennungsvorrichtung zu erzeugen, welches das lichtempfindliche Element des optischen Sensors (ein solcher kann insbesondere eine Kamera sein) von dem Bereich trennt, an welchem sich die Kapsel befindet und durch welches hindurch die Kapselerkennung stattfindet. Dieses transparente Teil ist im Allgemeinen ein Fenster mit oder ohne Linsenfunktion (in diesem Kontext wird auch eine Kameralinse als "Fenster" bezeichnet, wenn sie gleichzeitig den Bereich des lichtempfindlichen Elements vom Bereich der Kapsel trennt). Der Luftstrom wird kapselseitig über das Fenster geführt, um einem Beschlagen des Fensters entgegenzuwirken und auch um es zu reinigen.

Eingangsseitig kann die Blasvorrichtung mit einem Bereich der Getränkezubereitungsmaschine verbunden sein, in welchem sich besonders trockene und/oder besonders warme Luft befindet, insbesondere in einer Umgebung des Wassererhitzungsmittels.

Die Erfindung betrifft auch eine Getränkezubereitungsmaschine mit einem Brühmodul der diskutierten Art.

Nachfolgend werden Ausführungsbeispiele der Erfindung anhand von Figuren beschrieben. In den Figuren bezeichnen gleiche Bezugszeichen gleiche oder analoge Elemente. Es zeigen:
- Fig. 1: eine Seitenansicht eines Brühmoduls, wobei einige Teile, insbesondere Gehäuseteile ausgeblendet sind;
- Fig. 2: eine Seitenansicht des Brühmoduls gemäss Fig. 1 während der Kapselerkennung;
- Fig. 3: eine Seitenansicht des Brühmoduls gemäss Fig. 1 und 2 während des Brühprozesses;
- Fig. 4: ein Detail des Brühmoduls gemäss Fig. 1-3, welches den zweiten Verriegelungsmechanismus erkennen lässt,
- Fig. 5: eine Detailansicht des Brühmoduls gemäss Fig. 1-4, und
- Fig. 6: ein Schema einer erfindungsgemässen Kaffeemaschine.

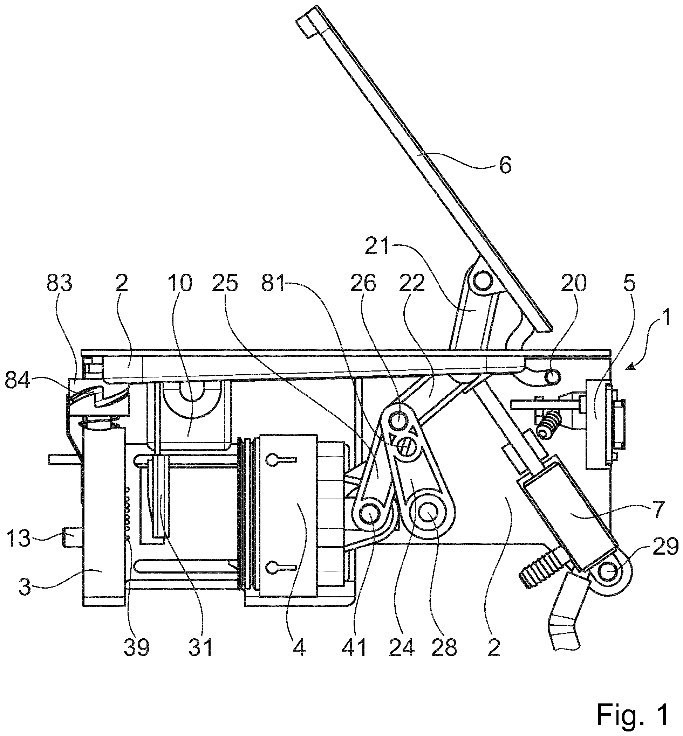

Das Brühmodul 1 gemäss **Figuren 1-5**, weist ein Brühmodulgehäuse 2 auf. Im Brühmodulgehäuse 2 sind zwei relativ zueinander bewegbare Brühmodulteile geführt, nämlich eine Ausleitvorrichtung 3 und ein Injektor 4.

Der Injektor 4 weist Perforationselemente zum Anstechen einer Portionskapsel 10 auf, die mindestens teilweise mit einem Extraktionsgut - bspw. gemahlenem Kaffee - gefüllt ist. Der Injektor 4 ist eingerichtet, eine Flüssigkeit - bspw. heisses Wasser - durch die Perforationselemente oder an diesen vorbei in die angestochene Kapsel einzubringen wobei das Wasser über eine Wasserzuführung (nicht gezeigt) zuführbar ist, die bspw. einen flexiblen Schlauch aufweisen kann.

Auch die Ausleitvorrichtung 3 weist im hier beschriebenen Ausführungsbeispiel Perforationselemente auf, nämlich extraktionsseitige Anstechspitzen 39. Diese können beispielsweise ausgebildet sein wie in WO 2015/039258 oder in WO 2010/118544 beschrieben oder eine andere Ausgestaltung aufweisen; auch die Verwendung von anderen Prinzipien als Anstechspitzen, bspw. mit gitterrostartigen Strukturen, sind möglich.

Ausserdem weist die Ausleitvorrichtung beidseits der Kapsel zur Injektorseite hin ragende Führungsmittel 31 auf, wie sie beispielsweise in WO 2015/048914 beschrieben sind, auf deren Inhalt hier betreffend die Funktionsweise dieser Führungsmittel ausdrücklich Bezug genommen wird.

Für die Zubereitung eines Brühgetränks wird wie an sich bekannt eine Kapsel zwischen der Ausleitvorrichtung 3 und dem Injektor 4 platziert, und diese werden so aufeinander zubewegt, dass zwischen diesen eine die Kapsel umfassende Brühkammer gebildet wird. Das heisse Wasser wird durch den Injektor unter Druck der Kapsel zugeführt, und das Extraktionsprodukt fliesst durch die Ausleitvorrichtung 3 via einen Getränkeauslauf 13 in ein bspw. darunter platziertes Trinkgefäss ab.

Die relative Bewegung des zweiten Brühmodulteils (Injektor) relativ zum ersten Brühmodulteil (Ausleitvorrichtung) wird im hier beschriebenen Ausführungsbeispiel dadurch erreicht, dass die Ausleitvorrichtung 3 gehäusefest montiert ist, während der Injektor 4 entlang der horizontalen Achse bewegbar ist.

Über der zwischen den Ausleitvorrichtung 3 und Injektor 4 liegenden Brühposition befindet sich eine Kapselerkennungsposition, in welche die Kapsel nach Einlegen durch eine Kapseleinlegeöffnung gelangt. Nebst der der Brühkammereinheit mit Ausleitvorrichtung 3 und Injektor 4 weist das Brühmodul dementsprechend eine Kapselerkennungsvorrichtung 5 mit Kamera auf, deren Aufbau beispielsweise mindestens teilweise dem in WO 2016/087190 beschriebenen Aufbau entspricht.

Das Brühmodul ist insbesondere eingerichtet, die durch die Kapseleinlegeöffiiung eingelegte Kapsel in der Kapselerkennungsposition zu halten bevor sie nach erfolgreicher Kapselerkennung und ggf. nach einem weiteren Schritt (bspw. Auslösen der Brühung durch den Benutzer) nach unten in die Brühposition gelangt. Zu diesem Zweck kann ein bspw. Mechanismus vorhanden sein, der ein die Kapsel an der Kapselerkennungsposition untergreifendes, für den Übergang in die Brühposition elektromechanisch gesteuert rückziehbares Element umfasst. Auch andere, bspw. rein mechanisch arbeitende Mechanismen sind denkbar.

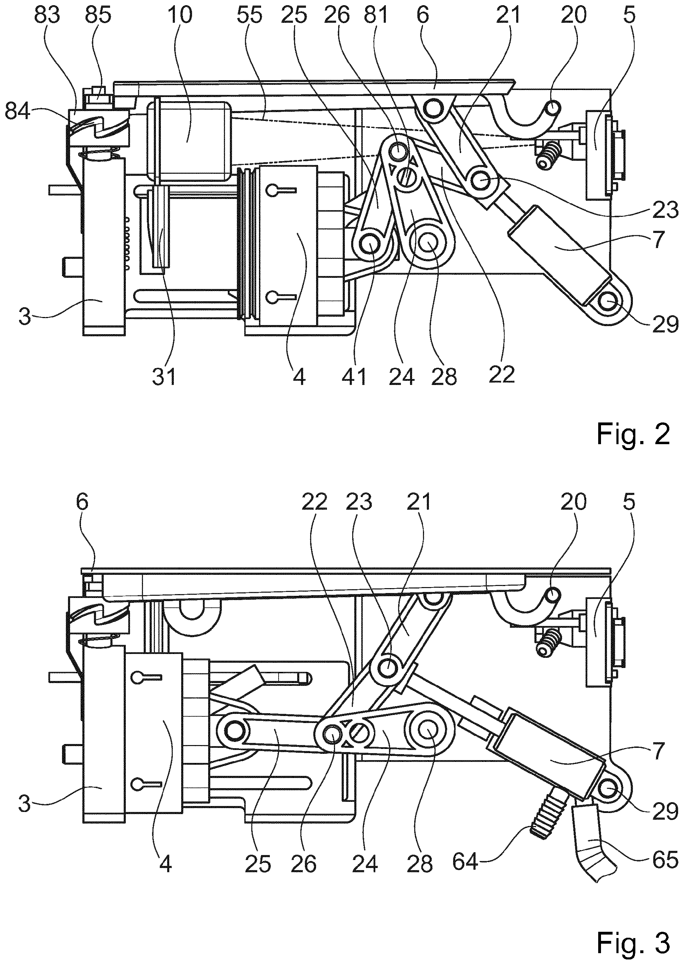

Für die Bedienung durch den Benutzer zwecks Schliessen der Brühkammer weist das Brühmodul einen Bedienhebel 6 auf, der an einer ersten fixen Lagerstelle 20 gelagert und um diese schwenkbar ist. Der Übertragungsmechanismus vom Bedienhebel 6 zum Injektor 4 ist ein Hebelmechanismus und umfasst einen ersten Kniehebel und einen zweiten Kniehebel. Der erste Kniehebel wird durch einen am Bedienhebel angreifenden ersten Hebelarm 21 und einen zweiten Hebelarm 22 gebildet die über einen ersten Kniehebelbolzen 23 schwenkbar miteinander verbunden sind, so dass sich ein erstes Kniegelenk bildet. Der zweite Kniehebel wird durch einen dritten Hebelarm 24 und einen vierten Hebelarm 25 gebildet, die über einen zweiten Kniehebelbolzen 26 schwenkbar miteinander verbunden sind, so dass ein zweites Kniegelenk gebildet wird. Der dritte Hebelarm 24 ist an einer zweiten fixen Lagerstelle 28 gelagert und um diese schwenkbar. Der vierte Hebelarm 25 greift am Injektor 4 an und ist um einen Lagerzapfen 41 des Injektors 4 schwenkbar. Der Injektor 4 ist so gelagert, dass er zwischen der ersten Brühmodulteil-Position (in Fig. 1 dargestellt) und der zweiten Brühmodulteil-Position (in Fig. 3 sichtbar) horizontal verschiebbar ist.

Der zweite Hebelarm 22 greift am zweiten Kniegelenk an, beispielsweise indem er mit dem zweiten Kniehebelbolzen 26 in Eingriff steht.

Am ersten Kniegelenk greift eine Gasdruckfeder 7 an, die sich zwischen einer dritten fixen Lagerstelle 29, um welche die Gasdruckfeder schwenkbar ist, und dem ersten Kniegelenk erstreckt, wobei sie bspw. mit dem ersten Kniehebelbolzen 23 im Eingriff steht.

Das Brühmodul weist ausserdem zwei Verriegelungsmechanismen auf.

Ein erster Verriegelungsmechanismus ist eingerichtet, eine Bewegung des zweiten Brühmodulteils von der ersten Brühmodulteilposition weg zu verhindern. Im dargestellten Ausführungsbeispiel weist der erste Verriegelungsmechanismus einen bspw. magnetisch ausgelöst in axialer Richtung verschiebbaren Verriegelungsbolzen 81 auf, welcher mit dem dritten und vierten Hebelarm in Eingriff bringbar ist, um im Blockierzustand ein Verschwenken des dritten und vierten Hebelarms relativ zueinander zu verhindern, was - da der dritte Hebelarm mit einer fixen Lagerstelle verbunden ist - auch eine Bewegung des Injektors 4 ganz verhindert. Alternativ wäre es auch möglich, einen Verriegelungsmechanismus vorzusehen, der direkt mit dem Injektor in Eingriff bringbar ist, oder der eingerichtet ist, eine Bewegung des dritten oder vierten Hebelarms relativ zum Gehäuse zu verhindern.

Ein zweiter Verriegelungsmechanismus ist eingerichtet, den Bedienhebel 6 relativ zum Gehäuse 2 zu blockieren. In der dargestellten Ausführungsform funktioniert der zweite Verriegelungsmechanismus nach dem bekannten sogenannten Kugelschreiber-Prinzip. Dazu ist eine Verriegelungshülse 83 vorhanden, welche durch den Bedienhebel selbst entgegen einer Federkraft nach unten gedrückt werden kann, und welche so geführt ist, dass sie bei jedem Drücken nach unten um einen vorgegebenen Winkel - bspw. 90° - gedreht wird. Die Drehung kann bspw. in an sich bekannter Art durch eine Steuernut 84 der Verriegelungshülse bewirkt werden, in welche ein Steuerungszapfen (in den Figuren nicht sichtbar) eingreift. Je nach eingenommener Orientierung blockiert die Verriegelungshülse eine Bewegung des Bedienhebels weg von der zweiten Bedienelement-Position (Fig. 2 und Fig. 3) mittels Verriegelungsflügel 85 oder gibt sie frei.

Die beschriebene Einrichtung ermöglicht folgenden Bedienablauf:

Im geöffneten Zustand, in welchem der Bedienhebel 6 nach oben verschwenkt, an der ersten Bedienelement-Position ist (Fig. 1), kann die Kapsel 10 durch die Kapseleinlegeöffnung eingelegt werden und gelangt so in die Kapselerkennungsposition.

Daraufhin betätigt der Benutzer den Bedienhebel 6 entgegen der Federkraft der Gasdruckfeder 7, während der erste Verriegelungsmechanismus das zweite Brühmodulteil blockiert. Der Bedienhebel gelangt von der ersten Bedienelement-Position in die zweite Bedienelement-Position. Dort wird der Bedienhebel durch den zweiten Verriegelungsmechanismus verriegelt.

Durch das Bringen des Bedienhebels in die zweite Bedienelement-Position wird im dargestellten Ausführungsbeispiel auch das Brühmodul verschlossen, womit bspw. auch verbunden sein kann, dass die Kapsel an der Kapselerkennungsposition von Umgebungslicht abgeschirmt wird.

Dann findet, bspw. selbsttätig, d.h. ohne weiteres Zutun durch den Benutzer (ein entsprechender Sensor, bspw. Schalter, kann feststellen, dass der Bedienhebel an der zweiten Bedienhebel-Position ist) die Kapselerkennung statt. Fig. 2 zeigt das Brühmodul während der Kapselerkennung. Die Kapselerkennung kann bspw. beinhalten, dass die Kapsel 10 beleuchtet wird - ein Lichtstrahl 55 ist in Fig. 2 angedeutet - und die beleuchtete Kapsel von der Kamera erfasst wird, woraufhin ein Code an der Kapsel oder eine Farbgebung oder ähnlich ausgewertet wird.

Ausgelöst durch die erfolgreiche Kapselerkennung oder durch eine Aktion des Benutzers wird anschliessend ein Bewegen der Kapsel nach unten bewirkt und die Brühkammer geschlossen. Dazu wird die Blockierung durch den ersten Verriegelungsmechanismus aufgehoben, bspw. durch einen Elektromagneten, welcher den Verriegelungsbolzen 81 axial verschiebt und so aus dem Eingriff mit dem dritten Hebelarm 24 löst. Aufgrund der durch die Gasdruckfeder ausgeübten Federkraft wird dadurch das erste Kniegelenk und als Folge auch das zweite Kniegelenk gestreckt, was den Injektor 4 bewegt und die Brühkammer schliesst, während sich die Kapsel darin befindet.

Dann kann der Brühprozess in an sich bekannter Art erfolgen, indem heisses Wasser unter Druck in die beim Schliessen der Brühkammer angestochene Kapsel eingeleitet und das entstehende Brühgetränk aus über die Ausleitvorrichtung aus dieser abgeleitet wird.

Nach erfolgter Brühung wird die Blockierung durch den zweiten Verriegelungsmechanismus wieder aufgehoben, indem der Benutzer den Bedienhebel leicht nach unten drückt, woraufhin der Benutzer den Bedienhebel nach oben ziehen kann. Aufgrund der Steifigkeit der Gasdruckfeder wird durch diese Bewegung auch der zweite Kniehebel gebeugt und in die in Fig. 1 dargestellte Stellung gebracht, woraufhin der erste Verriegelungsmechanismus den zweiten Knieheben sperren kann. Durch das Öffnen kann auch bewirkt werden, dass die gebrauchte Kapsel nach unten in deinen Kapselbehälter fällt. Ein entsprechender Mechanismus ist beispielsweise in WO 2015/048914 beschrieben.

Wenn der Benutzer nach erfolgter Kapselerkennung die Kapsel entnehmen möchte anstatt sie in die Brühposition zu bringen und die Brühkammer zu schliessen - bspw. wenn sich aufgrund der Kapselerkennung herausstellt, dass die gewählte Kapsel für das gewünschte Getränk nicht geeignet ist - kann der Benutzer durch Drücken des Bedienhebels nach unten die Blockierung durch den zweiten Verriegelungsmechanismus aufheben. Daraufhin drückt die Gasdruckfeder den Bedienhebel wieder nach oben, und der Benutzer kann die Kapsel aus der Kapselerkennungsposition entfernen.

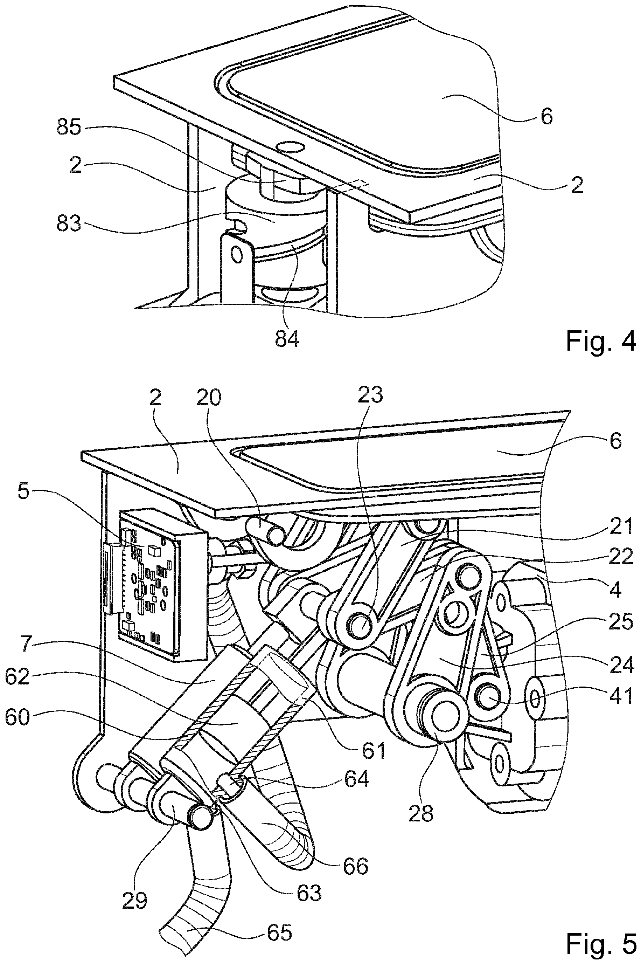

Ein weiteres Merkmal ist in Fig. 5 besonders gut sichtbar. Mit dem Hebelmechanismus ist nebst den vorstehend beschriebenen Elementen auch eine Blasvorrichtung 60 - funktionell einem Blasebalg entsprechend - verbunden. Diese weist hier einen Zylinder 61 und einen im Zylinder verschiebbaren Kolben 62 auf. Der Zylinder 61 ist schwenkbar an der dritten fixen Lagerstelle 29 gelagert, während der Kolben 62 über einen Pleuel mit dem ersten Kniehebelbolzen verbunden ist, so dass beim Spannen oder Entspannen der Gasdruckfeder auch der Kolben 62 im Zylinder bewegt wird. Ein aktives Volumen, welches durch Verschiebung des Kolbens 62 im Zylinder vergrössert oder verkleinert wird, bildet sich in der dargestellten Orientierung unterhalb des Kolbens 62, in Fig. 5 links unterhalb des Kolbens.

In das aktive Volumen des Zylinders 61 münden zwei Luftanschlüsse 63, 64.

Ein erster Luftanschluss 63 ist mit einem Luftansaugschlauch 65 verbunden, durch welchen Luft angesaugt werden kann. Der Schlauch führt bspw. zu einem Ort innerhalb oder ausserhalb eines Getränkezubereitungsmaschinengehäuses, an welchem damit zu rechnen ist, dass besonders trockene und/oder besonders warme Luft vorhanden ist. In einem Ausführungsbeispiel führt der Luftansaugschlauch zu einem Ort neben den Wassererhitzungsmitteln, wo aufgrund entstehender Abwärme eine leicht erhöhte Temperatur herrscht und die Luft daher vorgewärmt wird.

An einen zweiten Luftanschluss 64 ist ein Verbindungsschlauch 66 angeschlossen, welcher zu einem Bereich der Kapselerkennungsvorrichtung 5 führt, der zur Kapselerkennungsposition hin unmittelbar an eine Linse oder ein Fenster angrenzt, welche bzw. welches zwischen dem Kamerasensor (bspw. mit einem CCD oder CMOS-Sensorarray) und der Kapselerkennungsposition angeordnet ist und bspw. verhindert, dass heisse Dämpfe aus der Brühkammer zum Kamerasensor gelangen.

Der erste und der zweite Luftanschluss 62, 63 und/oder die entsprechenden daran angeschlossenen Schläuche 65, 66 sind je mit einem Ventilmittel versehen - bspw. einen einfachen Ventil, wie es vom Prinzip her zum Aufblasen von Luftballons verwendet wird - welche bewirken, dass durch den ersten Luftanschluss Luft nur angesaugt, nicht aber ausgeblasen werden kann und durch den zweiten Luftanschluss umgekehrt nur Luft ausgeblasen, nicht aber angesaugt werden kann.

Die Blasvorrichtung 60 ist parallel zur Luftdruckfeder 7 angeordnet. Dadurch wird beim Spannen der Luftdruckfeder 7 durch Betätigen des Bedienhebels 6 die im Zylinder 61 vorhandene Luft durch den Verbindungsschlauch vor die Linse bzw. das Fenster geblasen, wodurch ein eventueller Beschlag oder eine Verschmutzung entfernt wird und/oder einem Beschlagen/verschmutzen vorgebeugt wird. Beim Entspannen der Gasdruckfeder beim Verschliessen der Brühkammer wird der Kolben wieder zurückbewegt, wodurch Luft angesaugt wird.

Eine mechanisch angetriebene Blasvorrichtung der beschriebenen Art kann auch an einer anderen Stelle als der beschriebenen im Brühmodul angeordnet sein und durch Relativbewegungen von Elementen betätigt werden, bspw. parallel zum ersten Kniehebel oder eventuell zum zweiten Kniehebel oder zwischen dem Brühmodulgehäuse und dem Injektor. Besonders vorteilhaft ist eine Anordnung, die wie im beschriebenen Ausführungsbeispiel einen Luftstrom zur Kapselerkennungsvorrichtung unmittelbar vor der Kapselerkennung bewirkt.

In Fig. 5 sieht man auch, dass im vorliegenden Ausführungsbeispiel jeder Hebelarm aus je zwei Hebelarmelementen aufgebaut ist, die symmetrisch zu einer vertikalen Mittelebene angeordnet sind, was aber keine Notwendigkeit ist. Die in diesem Text beschriebenen Drehpunkte sind demnach als Drehachsen ausgebildet oder beinhalten zwei miteinander fluchtende Drehpunkte, symmetrisch zur vertikalen Mittelebene.

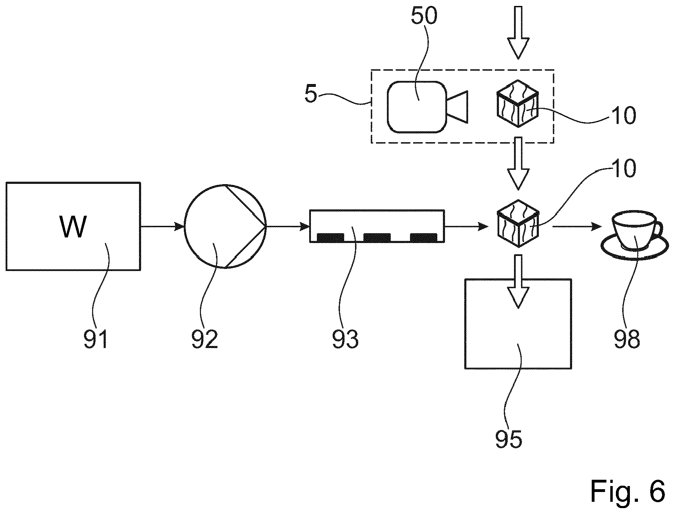

Eine erfindungsgemässe Maschine zum Zubereiten eines Brühgetränks aus einer Portionskapsel 10, nämlich hier eine Kaffeemaschine, mit einem Brühmodul ist in Figur 6 schematisch dargestellt. Sie weist nebst dem Brühmodul einen Wassertank 91, eine Pumpe 92 zum Zuführen von Brühwasser zum Injektor 4 und eine Wasserheizungsvorrichtung 93 (bspw. Durchlauferhitzer) auf. Das Kapselerkennungsmodul 5 mit Kamera 50 befindet sich insbesondere oberhalb der Brühkammer. Eine eingelegte Kapsel kann nach dem Kapselerkennungsprozess wie vorstehend beschrieben durch die Wirkung der Schwerkraft nach unten weitertransportiert werden. Unterhalb des Brühmoduls ist ausserdem ein Kapselbehälter 95 angeordnet, in welchen die Kapseln 1 nach dem Brühprozess fallen bzw. transportiert werden. Das Bezugszeichen 98 bezeichnet eine Kaffeetasse.

### Bezugszeichenliste:

- 1: Brühmodul
- 2: Brühmodulgehäuse
- 3: Ausleitvorrichtung
- 4: Injektor
- 5: Kapselerkennungsvorrichtung
- 6: Bedienhebel
- 7: Gasdruckfeder
- 10: Portionskapsel
- 13: Getränkeauslauf
- 20: erste fixe Lagerstelle
- 21: Erster Hebelarm
- 22: zweiter Hebelarm
- 23: erster Kniehebelbolzen
- 24: dritter Hebelarm
- 25: vierter Hebelarm
- 26: zweiter Kniehebelbolzen
- 28: zweite fixe Lagerstelle
- 29: dritte fixe Lagerstelles
- 31: Führungsmittel
- 39: extraktionsseitige Anstechspitzen
- 41: Lagerzapfen
- 50: Kamera
- 55: Lichtstrahl
- 60: Blasvorrichtung
- 61: Zylinder
- 62: Kolben
- 63: erster Luftanschluss
- 64: zweiter Luftanschluss
- 65: Luftansaugschlauch
- 66: Verbindungsschlauch
- 81: Verriegelungsbolzen
- 83: Verriegelungshülse
- 84: Steuernut
- 85: Verriegelungsflügel
- 91: Wassertank
- 92: Pumpe
- 93: Wasserheizungsvorrichtung
- 95: Kapselbehälter
- 98: Kaffeetasse

## Patentansprüche

1. Brühmodul zum Zubereiten eines Brühgetränks aus einer Portionskapsel, aufweisend:
• ein erstes Brühmodulteil (3) und ein relativ zu diesem zwischen einer ersten Brühmodulteil-Position und einer zweiten Brühmodulteil-Position bewegbares zweites Brühmodulteil (4), wobei in der zweiten Brühmodulteil-Position eine Brühkammer gebildet wird, welche die sich in einer Brühposition befindende Portionskapsel (10) beim Brühvorgang mindestens teilweise umgibt, wobei das Brühmodul eingerichtet ist, durch das Einleiten einer Brühflüssigkeit in die Portionskapsel ein Brühgetränk zu brühen und dieses aus der Portionskapsel abzuleiten;
• ein Bedienelement (6) welches manuell von einer ersten in eine zweite Bedienelement-Position bringbar ist,
**gekennzeichnet durch** einen Energiespeicher (7), der eingerichtet ist, **durch** Bewegen des Bedienelements von der ersten in die zweite Position in das Brühmodul eingekoppelte Energie zwischenzuspeichern und **durch** eine Freigabe ausgelöst in eine Bewegung von der ersten Brühmodulteil-Position in die zweite Brühmodulteil-Position wieder umzusetzen.

2. Brühmodul nach Anspruch 1, wobei das Bedienelement (6) ein Bedienhebel ist, welcher durch eine Kippbewegung von oben nach unten von der ersten in die zweite Position bringbar ist, und wobei das Bedienelement in der zweiten Position eine Kapseleinlegeöffnung verschliesst.

3. Brühmodul nach Anspruch 1 oder 2, wobei der Energiespeicher (7) eine Feder aufweist, die durch das Bewegen des Bedienelements von der ersten in die zweite Position gespannt wird.

4. Brühmodul nach einem der vorangehenden Ansprüche, aufweisend einen Dämpfungsmechanismus, welcher bei der Bewegung von der ersten Brühmodulteil-Position in die zweite Brühmodulteil-Position dämpfend wirkt.

5. Brühmodul nach Anspruch 4, wobei der Energiespeicher (7) eine Gasdruckfeder ist, in welche der Dämpfungsmechanismus integriert ist.

6. Brühmodul nach einem der vorangehenden Ansprüche, aufweisend einen Übertragungsmechanismus zum Einkoppeln der am Bedienelement (6) geleisteten physikalischen Arbeit in den Energiespeicher (7) und zum Umsetzen einer arbeitsleistenden Kraft vom Energiespeicher (7) in die Bewegung des zweiten Brühmodulteils (4) relativ zum ersten Brühmodulteil (3).

7. Brühmodul nach Anspruch 6, wobei der Übertragungsmechanismus als Hebelmechanismus ausgebildet ist und eine Mehrzahl von relativ zueinander verschwenkbaren Hebeln (21, 22, 24, 25) aufweist.

8. Brühmodul nach Anspruch 7, wobei der Übertragungsmechanismus einen ersten Kniehebel aufweist, wobei der Energiespeicher mit einem Kniegelenk (23) des ersten Kniehebels verbunden ist und ein End-Drehpunkt des Kniehebels mit dem Betätigungselement verbunden ist.

9. Brühmodul nach Anspruch 7 oder 8, wobei der Übertragungsmechanismus einen zweiten Kniehebel aufweist, der an einem der End-Drehpunkte mit dem zweiten Brühmodulteil (4) und am anderen der End-Drehpunkte mit einer fixen Lagestelle (28) verbunden ist, wobei über ein Kniegelenk (26) des zweiten Kniehebels eine Antriebskraft für die Bewegung von der ersten Brühmodulteil-Position in die zweite Brühmodulteil-Position einkoppelbar ist.

10. Brühmodul nach einem der Ansprüche 6-9, aufweisend eine mechanisch antreibbare Blasvorrichtung (60), die angeordnet ist, durch den Übertragungsmechanismus angetrieben zu werden.

11. Brühmodul nach einem der vorangehenden Ansprüche, aufweisend einen ersten Verriegelungsmechanismus, der eingerichtet ist, je nach Zustand eine Bewegung des zweiten Brühmodulteils (4) von der ersten Brühmodulteilposition weg zu verhindern oder freizugeben.

12. Brühmodul nach einem der vorangehenden Ansprüche, aufweisend einen zweiten Verriegelungsmechanismus, der eingerichtet ist, je nach Zustand eine Bewegung des Bedienelements weg von der zweiten Bedienelement-Position zu verhindern oder freizugeben.

13. Brühmodul nach einem der vorangehenden Ansprüche, aufweisend eine Kapselerkennungsvorrichtung (5), die eingerichtet ist, Eigenschaften einer sich an einer Kapselerkennungsposition befindenden Portionskapsel elektronisch zu erfassen.

14. Brühmodul nach Anspruch 13, wobei die Kapselerkennungsposition oberhalb der Brühposition ist.

15. Getränkezubereitungsmaschine, insbesondere Kaffeemaschine, aufweisend eine Wasserzufuhr, eine Pumpe (92) und ein Wassererhitzungsmittel (93) sowie ein Brühmodul nach einem der vorangehenden Ansprüche.
